# DEMANDE DE BREVET EUROPEEN

(11) **EP 4 800 597 A1**
(43) Date de publication de la demande: **02.09.2026**
(21) Numéro de dépôt: 26159153.1
(22) Date de dépôt: 17.02.2026
(51) Int. Cl.: G06F 30/13, G06F 30/20, H02S 10/00, G06F 111/10

(54) **PROCEDE MIS EN OEUVRE PAR ORDINATEUR POUR OPTIMISER LA CONCEPTION STRUCTURELLE ET DIMENTIONNELLE D'UNE CENTRALE PHOTOVOLTAIQUE ET UNE CENTRALE PHOTOVOLTAIQUE AINSI OPTIMISEE**

(30) Priorité: 25.02.2025 FR 2501923
(71) Demandeur: TSE, 06560 Valbonne Sophia Antipolis (FR)
(72) Inventeur: BURTIN, Denis, 38210 Vourey (FR); LABORDE, Jérôme, 69480 Lachassagne (FR); MICHEL, Théodore, 06600 Antibes (FR)
(74) Mandataire: Murgitroyd & Company

(57) **Abrégé**

La présente invention concerne un procédé (200) mis en œuvre par un ordinateur pour optimiser la conception d'une centrale photovoltaïque (100), la centrale photovoltaïque (100) comprenant une structure pourvue d'une pluralité d'unités de production d'électricité, les unités de production d'électricité ayant chacune une orientation spécifique par rapport à leur support afin d'optimiser leur production d'électricité, le procédé comprenant notamment l'étape visant à obtenir dans un ordinateur un modèle mathématique de la centrale photovoltaïque (100) comprenant les dimensions desdites unités de production d'électricité, les positions desdites unités de production d'électricité, les distances mutuelles entre lesdites unités de production d'électricité, et l'orientation spécifique pour chacune desdites unités de production d'électricité.

## Description

### Domaine de l'invention

L'invention concerne un procédé mis en œuvre par ordinateur pour optimiser la conception d'une centrale photovoltaïque. Le procédé selon l'invention permet de mieux maitriser le dimensionnement de la centrale photovoltaïque pour ainsi réduire les coûts liés à sa construction. De plus, l'invention concerne une centrale photovoltaïque ainsi optimisée comprenant une structure pourvue d'une pluralité d'unités de production d'électricité, dans laquelle au moins une partie des unités de production d'électricité est conçue pour modifier leur orientation par rapport au soleil, les unités de production d'électricité étant connectées à des moyens de commande pour contrôler ladite orientation.

L'invention concerne plus particulièrement l'amélioration de la conception d'une centrale photovoltaïque en tenant compte des forces du vent exercées sur différentes parties de la centrale photovoltaïque. A l'aide du procédé selon l'invention, des parties sélectionnées de la centrale photovoltaïque sont conçues pour résister à des forces plus importantes, tandis que d'autres parties de la centrale peuvent être conçues pour résister à des forces moins importantes. Grâce à une meilleur compréhension des forces exercées sur les différentes parties d'une centrale photovoltaïque, le dimensionnement structurel de la centrale photovoltaïque peut être optimisé.

### Etat de la technique

Dans l'art antérieur, il est connu que le vent exerce des forces sur la structure d'une centrale photovoltaïque et que si ces forces dépassent un certain seuil, le vent peut compromettre le bon fonctionnement de la centrale photovoltaïque et entraîner une défaillance mécanique de la centrale photovoltaïque.

Les éléments structurels qui forment le pourtour de la centrale photovoltaïque sont les plus exposés à l'influence du vent. Ces éléments structurels extérieurs ne sont pas protégés par des structures adjacentes et sont directement exposés au vent entrant.

Dans l'art antérieur, il est connu que l'un des calculs les plus difficiles dans la conception finale d'une centrale photovoltaïque est l'estimation précise des efforts causés par le vent sur des tables individuelles de la centrale photovoltaïque, chaque table supportant un ou plusieurs panneaux photovoltaïques. Il est également connu que les forces exercées par le vent sur les différentes tables diffèrent en fonction de la position de chaque table dans la configuration de la centrale photovoltaïque. Les tables placées sur le pourtour extérieur de la centrale photovoltaïque sont directement exposées au vent entrant et doivent résister à des forces relativement importantes. Les tables placées près du centre de la centrale sont mieux protégées contre les forces directes du vent et doivent résister à des forces relativement faibles.

Dans l'état de l'art, il est connu de renforcer les tables placées sur le pourtour extérieur de la centrale photovoltaïque pour ainsi assurer que ces tables extérieures puissent supporter les forces exercées par le vent.

Cependant, ces renforcements sont souvent effectués sur la base de calculs et/ou des tests en soufflerie approximatifs des forces exercées par le vent, sans que l'interaction spécifique entre le vent et l'agencement des tables dans la centrale photovoltaïque ne soit prise en considération.

Le but de l'invention est de permettre à un utilisateur d'utiliser un modèle mathématique de la centrale photovoltaïque pour estimer les forces exercées sur les différentes tables dans les différentes parties de la centrale photovoltaïque et d'améliorer la conception de la centrale photovoltaïque en tenant compte du résultat de cette estimation.

### Objet de l'invention

L'objet de la présente invention concerne un procédé mis en œuvre par ordinateur.

Selon un premier aspect, l'invention concerne un procédé mis en œuvre par ordinateur pour optimiser la conception d'une centrale photovoltaïque, la centrale photovoltaïque comprenant une structure pourvue d'une pluralité d'unités de production d'électricité, les unités de production d'électricité ayant chacune une orientation spécifique par rapport à leur support afin d'optimiser leur production d'électricité, le procédé comprenant les étapes suivantes :
- obtenir dans un ordinateur un modèle mathématique de la centrale photovoltaïque comprenant les dimensions desdites unités de production d'électricité, les positions desdites unités de production d'électricité, les distances mutuelles entre lesdites unités de production d'électricité, et l'orientation spécifique pour chacune desdites unités de production d'électricité,
- identifier un premier groupe d'unités de production d'électricité, comprenant des unités de production d'électricité positionnées sur le pourtour de la centrale photovoltaïque (100),
- identifier un deuxième groupe d'unités de production d'électricité, comprenant des unités de production d'électricité positionnées dans une zone centrale de la centrale photovoltaïque,
- déterminer des données représentant un vent entrant en direction de la centrale photovoltaïque avec une vitesse du vent déterminée et une direction du vent déterminée,
- utiliser ladite direction du vent déterminée pour identifier un sous-ensemble dudit premier groupe, comprenant une pluralité des unités de production d'électricité positionnées sur le pourtour de la centrale photovoltaïque et directement exposées audit vent entrant,
- estimer au moyen du modèle mathématique et des données représentant le vent entrant sur une durée déterminée, les forces créées par le vent entrant sur les unités de production d'électricité du premier et du deuxième groupe, pour une pluralité d'orientations pour chacune de ladite pluralité d'unités de production d'électricité dudit sous-ensemble du premier groupe,
- sélectionner, parmi cette pluralité d'orientations pour ladite pluralité d'unités de production d'électricité dudit sous-ensemble du premier groupe, une orientation de sécurité pour au moins une partie des unités de production d'électricité du premier et du deuxième groupe qui correspond à un ensemble d'orientations optimales pour résister aux forces créées par le vent entrant sur les unités de production d'électricité,
- utiliser les forces créées par le vent sur les unités de production d'électricité du premier et du deuxième groupe dans ladite orientation de sécurité pour calculer un dimensionnement pour la structure desdites unités de production d'électricité du premier et du deuxième groupe adaptée pour résister audites forces créées par le vent.

Selon un mode de réalisation de l'invention, le modèle mathématique comprend des paramètres définissant la zone de l'implantation de la centrale photovoltaïque, telles que la latitude, la longitude, l'altitude, l'orientation, et la rugosité du terrain.

Selon un mode de réalisation de l'invention, l'étape d'estimer les forces créées par le vent entrant sur les unités de production d'électricité au moyen du modèle mathématique et des données représentant un vent entrant en direction de la centrale photovoltaïque avec une force du vent déterminée et une direction du vent déterminée comprend :
a) estimer, pour une première orientation de la pluralité d'unités de production d'électricité dudit sous-ensemble du premier groupe une force créée par le vent sur les unités de production d'électricité du premier et du deuxième groupe,
b) modifier l'orientation d'au moins une première unité de production d'électricité de ladite pluralité d'unités de production d'électricité dudit sous-ensemble du premier groupe pour obtenir une orientation modifiée de la pluralité d'unités de production d'électricité dudit sous-ensemble du premier groupe,
c) estimer pour l'orientation modifiée de la pluralité d'unités de production d'électricité dudit sous-ensemble du premier groupe une force maximale modifiée créée par le vent sur les unités de production d'électricité du premier et du deuxième groupe, et
d) répéter les étapes b) et c) pour ainsi obtenir des données concernant la force créée par le vent sur les unités de production d'électricité du premier et du deuxième groupe pour une pluralité d'orientations pour chacune de ladite pluralité d'unités de production d'électricité dudit sous-ensemble du premier groupe.
Selon un mode de réalisation de l'invention, le premier groupe des unités de production d'électricité comprend au moins une rangée des unités de production d'électricité positionnées sur le pourtour de la centrale photovoltaïque.

Selon un deuxième aspect, l'invention concerne une centrale photovoltaïque pour la production d'électricité comprenant :
- une pluralité d'unités de production d'électricité, avec un premier groupe des unités de production d'électricité positionnées en bordure de la centrale photovoltaïque, et un deuxième groupe des unités de production d'électricité positionnées au centre de la centrale photovoltaïque, dans laquelle au moins les unités de production d'électricité du premier groupe sont chacune conçues pour modifier leur orientation en fonction de la position du soleil, les unités de production d'électricité du premier groupe étant connectées à des moyens de commande pour contrôler ladite orientation,
   des moyens pour déterminer la vitesse et la direction d'un vent entrant, lesdits moyens étant connectés a des moyen de calcul adaptés pour comparer ladite vitesse et ladite direction d'un vent entrant avec des valeurs seuils,
      dans laquelle les unités de production d'électricité de la centrale photovoltaïque ont une position de sécurité qui correspond à un ensemble de orientations optimales pour résister aux forces créées par le vent entrant et dans laquelle les moyens de calcul sont adaptés pour comparer, pour un instant déterminé, la vitesse et la direction du vent entrant avec des valeurs seuils et dans laquelle les moyens de calcul sont adaptés pour générer des instructions pour les moyens de commande pour déplacer les unités de production vers leur orientation de sécurité dès que les moyens de calcul ont déterminé que la vitesse et la direction du vent entrant dépassent lesdits valeurs seuils , et
   des moyens de contrôle connectés aux moyens de calcul et adaptés pour recevoir des instructions desdits moyens de calcul et pour orienter chacune des unités de production d'électricité vers leur orientation de sécurité.

Selon un mode de réalisation de l'invention, les moyens pour déterminer la vitesse et la direction d'un vent entrant comprennent au moins un capteur de vent.

Selon un troisième aspect, l'invention concerne un produit programme d'ordinateur comprenant des instructions qui, lorsque le programme est exécuté par un ordinateur, conduisent celui-ci à mettre en œuvre le procédé.

Selon un quatrième aspect, l'invention concerne un support d'enregistrement lisible par ordinateur comprenant des instructions qui, lorsqu'elles sont exécutées par un ordinateur, conduisent celui-ci à mettre en œuvre le procédé.

### Brève description des dessins

Les but, objet et caractéristiques de l'invention apparaîtront plus clairement à la lecture de la description qui suit, faite en référence aux figures dans lesquelles :
[Fig. 1] montre un exemple d'une partie d'une centrale photovoltaïque positionnée sur un support, selon un mode de réalisation de l'invention ;
[Fig. 2] montre un exemple d'une fixation d'une table de la centrale photovoltaïque selon la figure 1, sur une extrémité supérieure d'un poteau ;
[Fig. 3] montre de façon schématique, selon une vue du dessus, une centrale photovoltaïque selon un mode de réalisation de l'invention ;
[Fig. 4] montre de façon schématique, selon une vue du dessus, une partie de la centrale photovoltaïque selon la figure 3 et de façon schématique un vent entrant en direction de la centrale photovoltaïque ; et
[Fig. 5] montre de façon schématique, selon une vue en perspective une centrale photovoltaïque et de façon schématique des ensembles d'unités de production d'électricité exposés au vent entrant en direction de la centrale photovoltaïque ; et
[Fig. 6] montre le diagramme d'un procédé mis en œuvre par ordinateur pour optimiser la conception d'une centrale photovoltaïque, selon un mode de réalisation de l'invention.

### Description détaillée de l'invention

La description détaillée ci-après a pour but d'exposer l'invention de manière suffisamment claire et complète, notamment à l'aide d'exemples, mais ne doit en aucun cas être regardée comme limitant l'étendue de la protection aux modes de réalisation particuliers et aux exemples présentés ci-après.

Dans la description qui suit, l'expression « unités de production d'électricité » est utilisée. Avec l'expression « unités de production d'électricité » référence est faite à un ou plusieurs panneaux photovoltaïques qui sont intégrés dans la centrale photovoltaïques en tant qu'ensemble. De plus, l'expression « unités de production d'électricité » fait référence à tous les éléments de construction nécessaires, le cas échéant, pour soutenir l'au moins un panneau photovoltaïque et pour permettre sa fixation dans la structure de la centrale photovoltaïque.

Dans la description qui suit, l'expression « orientation des unités de production » est utilisée. Avec le terme orientation référence est faite à l'orientation desdites unités de production en fonction de la position du soleil. La centrale photovoltaïque qui est décrite ci-dessous comprend un système de tracking qui permet aux unités de production de modifier leur inclinaison par rapport à leur fixation sur le sol pour ainsi modifier leur exposition au soleil avec le but d'optimiser la production d'électricité.

Dans la description qui suit, l'expression « orientations de sécurité » est utilisée. Avec l'expression « orientations de sécurité » il est fait référence à l'ensemble des orientations des unités de production d'électricité d'un sous-ensemble des unités de production d'électricité placées sur le pourtour, et optionnellement au centre de la centrale photovoltaïque pour lesquelles les forces créées par le vent sur au moins une partie ou sur l'ensembles des unités de production d'électricité de la centrale sont minimisées.

Dans la description qui suit, le terme « table » est utilisé. Avec le terme « table » il est fait référence à un élément de construction de la centrale photovoltaïque, spécifiquement adapté pour supporter un aux plusieurs panneaux photovoltaïques. Typiquement, une table est adaptée pour supporter une ou plusieurs rangées de panneaux photovoltaïques, chaque rangée comprenant, par exemple, entre cinq et dix panneaux photovoltaïques.

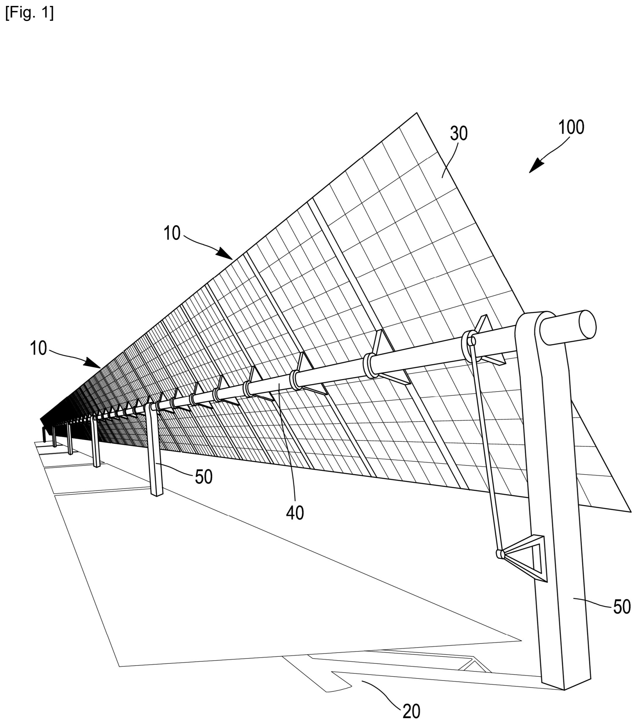

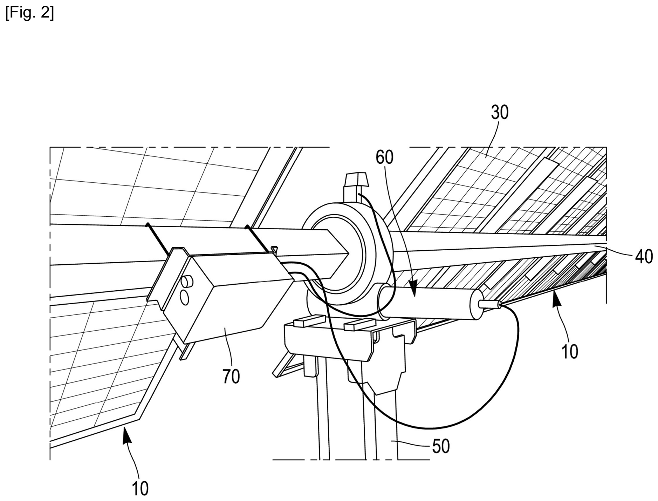

La figure 1 montre un exemple d'une partie d'une centrale photovoltaïque 100 positionnée sur un support 20, tel qu'une parcelle agricole. La centrale photovoltaïque 100 comprend des tables 10 sur lesquelles sont fixés des panneaux photovoltaïques 30. Les tables 10 sont accrochées à une structure porteuse se présentant sous la forme d'un tube 40. Le tube 40 est fixé sur des poteaux 50. Un exemple d'une fixation dudit tube 40 sur un poteau 50 est montré sur la figure 2.

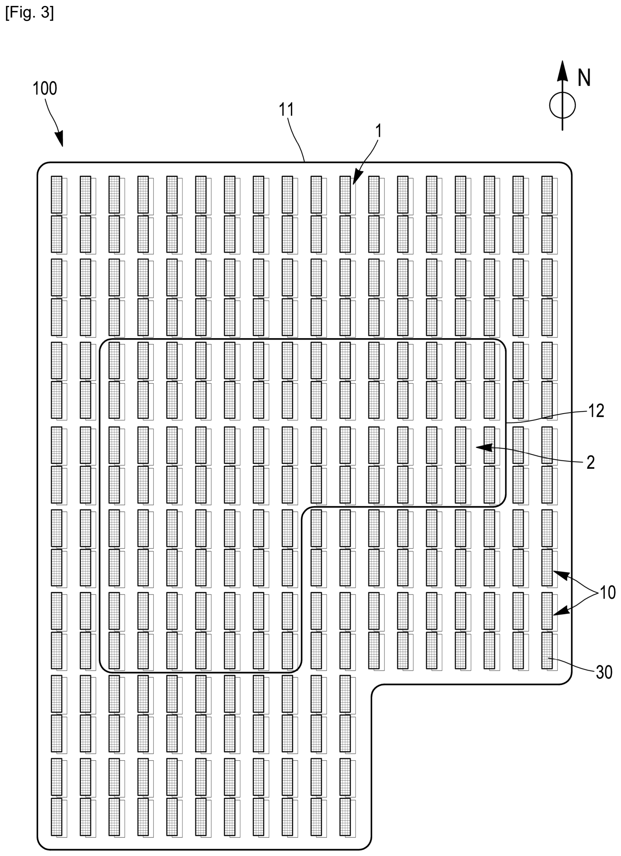

La figure 1 montre une seule rangée de tables 10 fixées à l'aide des tubes 40 sur des poteaux 50. De façon habituelle, une centrale photovoltaïque 100 comprend une multitude des rangées de tables 10, pour ensemble former la centrale 100. Un exemple d'une disposition des rangées de tables 10 formant une centrale est schématiquement représenté sur la figure 3.

La centrale photovoltaïque 100 selon les figures 1 à 4 peut être utilisée comme centrale « agrivoltaïque ». Une telle centrale photovoltaïque est définie comme une installation de production d'électricité utilisant l'énergie solaire, dont les panneaux photovoltaïques sont situés sur une parcelle où ils permettent de maintenir ou de développer durablement une production agricole.

Dans le cas de l'utilisation d'une centrale « agrivoltaïque » par exemple, les rangées de tables sont espacées de façon adaptée pour permettre ladite activité agricole entre les rangées de tables adjacentes.

Un des facteurs prépondérants pour l'efficacité d'une centrale photovoltaïque 100 selon la figure 1 est l'optimisation de l'orientation des panneaux photovoltaïques 30 par rapport à la position du soleil pendant la journée et pendant l'année.

Pour optimiser la production électrique à l'aide des panneaux photovoltaïques 30, la centrale photovoltaïques 100 est de façon habituelle pourvue d'un système dit « tracking ».

Dans la figure 2, un exemple de la fixation des tables 10 sur des poteaux 50 à l'aide des tubes 40 est montré. La figure 2 montre que le tube 40 est fixé sur l'extrémité supérieure du poteaux 50 à l'aide d'un moteur électrique 60. Ledit moteur 60 est connecté à un système de contrôle, schématiquement indiqué à l'aide du numéro de référence 70, pour alimenter ledit moteur 60 et pour donner des instructions audit moteur 60.

Pour maximiser la production d'énergie, les panneaux photovoltaïques 30 sont typiquement alignés et montés sur des moteurs 60 permettant leur rotation d'Est en Ouest autour d'un axe Nord-Sud. La rotation des tubes 40 grâce à la présence des moteurs 60 permet ainsi de modifier et d'optimiser l'orientation des panneaux photovoltaïques 30 par rapport au soleil.

Grâce à l'alignement des panneaux photovoltaïques 30 Nord-Sud et au système de tracking, les panneaux photovoltaïques 30 peuvent suivre de manière optimale le mouvement du soleil pendant la journée et pendant les jours de l'année.

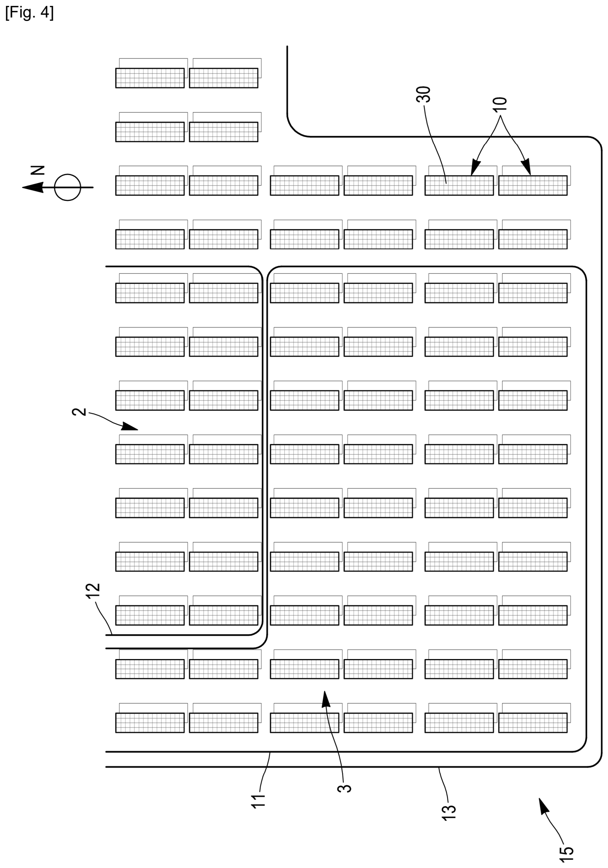

Les figures 3 et 4 montrent, de façon schématique, une centrale photovoltaïque 100 vue d'en haut. Les figures 3 et 4 montrent selon une vue de dessus les tables 10, qui supportent des panneaux photovoltaïques 30. Comme expliqué ci-dessus, dans la présente description, l'expression « unité de production d'électricité » est utilisée pour faire référence à l'ensemble des tables 10 et des panneaux photovoltaïques 30. Les tables 10 de la centrale photovoltaïque 100 sont essentiellement positionnées dans la direction Nord-Sud pour optimiser la production d'électricité à l'aide des panneaux photovoltaïques 30.

La figure 3 montre que la centrale photovoltaïque 100 est pourvue d'un premier groupe 1 d'unités de production d'électricité, comprenant des unités de production d'électricité positionnées sur le pourtour de la centrale photovoltaïque 100. Sur la figure 3, les unités de production d'électricité du premier groupe 1 se trouvent entre les lignes 11 et 12. De plus, la centrale photovoltaïque est pourvue d'un deuxième groupe 2 d'unités de production d'électricité, comprenant des unités de production d'électricité positionnées dans une zone de la centrale photovoltaïque 100 moins exposée au vent. Dans la figure 3, les unités de production d'électricité du deuxième groupe 2 se trouvent à l'intérieur de la ligne 12. Selon un mode de réalisation de l'invention, le premier groupe 1 d'unités de production d'électricité, comprend entre une et trois rangées d'unités de production d'électricité positionnées sur le pourtour de la centrale photovoltaïque 100.

Selon un mode de réalisation de la centrale photovoltaïque 100 selon l'invention, au moins les unités de production d'électricité du premier groupe 1 sont chacune conçues pour modifier leur orientation en fonction de la position du soleil, les unités de production d'électricité du premier groupe 1 étant connectées à des moyens de commande pour contrôler ladite orientation.

Selon un mode de réalisation alternatif de la centrale photovoltaïque 100 selon l'invention, toutes les unités de production d'électricité du premier groupe 1 et du deuxième groupe 2 sont chacune conçues pour modifier leur orientation par rapport au soleil, toutes les unités de production d'électricité étant connectées à des moyens de commande pour contrôler ladite orientation.

Sur la figure 4, une partie de la centrale photovoltaïque 100 selon une vue du dessus est montrée. Sur la figure 4, de plus, un vent entrant, qui souffle à travers la centrale photovoltaïque 100, est indiqué de façon schématique à l'aide de la flèche 15.

Selon l'exemple de la figure 4, le vent entrant 15 souffle en direction du Nord-Est.

La figure 4 montre que, dans le premier groupe 1 d'unités de production d'électricité, nous pouvons identifier un sous-ensemble 3 dudit premier groupe 1, comprenant une pluralité d'unités de production d'électricité positionnées sur le pourtour de la centrale photovoltaïque 100 directement exposées audit vent entrant 15.

Sur la figure 4, ledit sous-ensemble 3 est indiqué à l'aide de la ligne 13.

L'un des principes de base de l'invention est de prendre en compte le fait que l'orientation des unités de production d'électricité dans le sous-ensemble 3 a un effet sur la façon dont le vent entrant 15 souffle sur les unités de production d'électricité de la centrale photovoltaïque 100.

Cela signifie que l'orientation exacte des unités de production d'électricité du sous-groupe 3 a un impact sur les forces finales exercées par le vent entrant 15 sur toutes les unités de production d'électricité de la centrale photovoltaïque 100.

En faisant référence aux figures 3 et 4, il est à noter que la direction du vent entrant 15 exerce une grande influence sur les forces que ledit vent génère sur les différentes tables 3 dans la centrale photovoltaïque 100. Par exemple, un vent entrant 15 avec une certaine vitesse selon une direction Est-Ouest a une influence beaucoup plus importante qu'un vent entrant selon la direction nord-sud avec la même vitesse. En faisant référence à la figure 4, on peut dire que plus le vent entrant 15 souffle selon la direction Est-Ouest, plus son influence est grande, et ce à vitesse constante. Par ailleurs, plus le vent entrant 15 souffle selon la direction Nord-Sud, plus son influence est faible, et ce à vitesse constante.

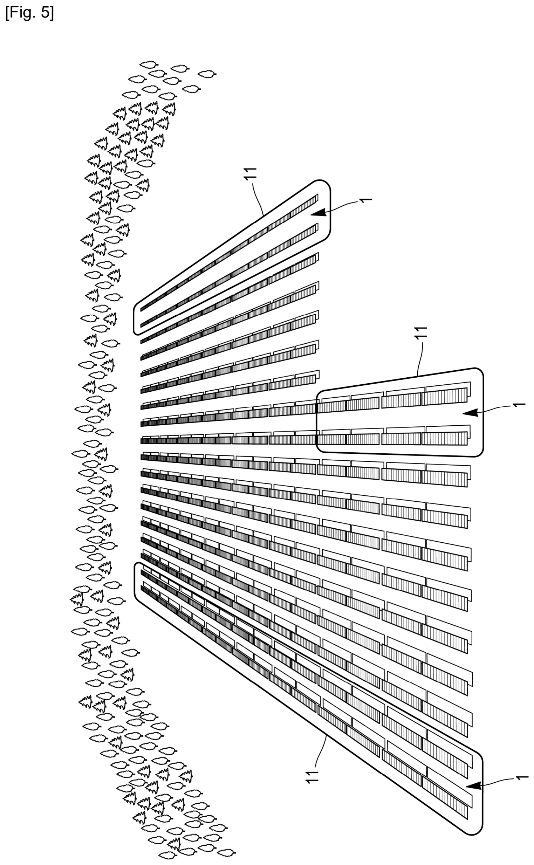

Pour cette raison, il est, selon un mode de réalisation de l'invention, possible de définir un premier groupe 1 d'unités de production d'électricité exposées au vent qui ne comprend que des unités de production d'électricité qui se trouvent sur le pourtour de la centrale photovoltaïque 100 dans la direction est-ouest. Cet exemple est illustré sur la figure 5.

Selon la figure 5, le premier groupe 1 comprend une pluralité d'unités de production d'électricité positionnées sur le pourtour de la centrale photovoltaïque 100 directement exposées audit vent entrant 15. Le premier groupe 1 selon l'exemple de la figure 5 ne comprend pas d'unités de production d'électricité positionnées au centre de la centrale photovoltaïque 100. Ces unités de production d'électricité se trouvent sur les extrémités des rangées dans la direction Nord-Sud.

Le groupe 1 selon la figure 5 comprend trois sous-ensembles, chacun entouré par une ligne 11, directement positionnées sur le pourtour de la centrale photovoltaïque 100 dans la direction Est-Ouest.

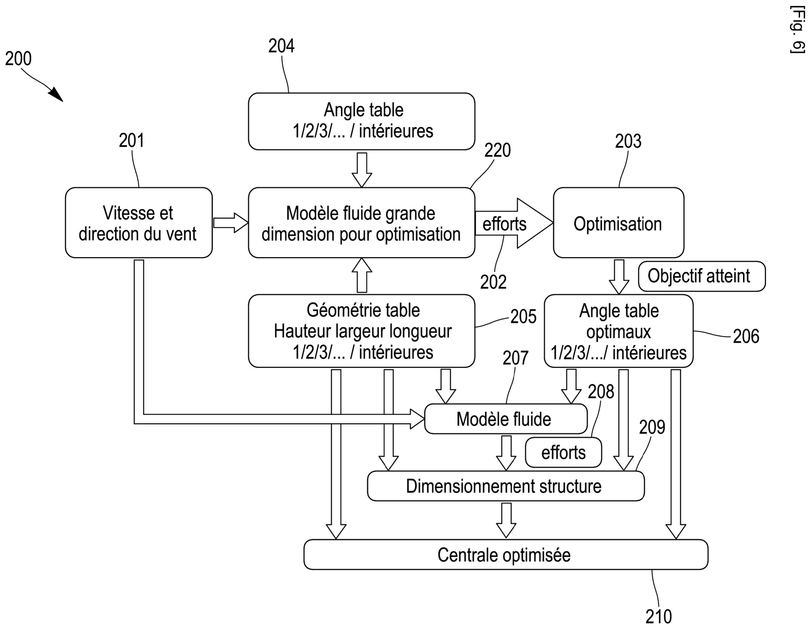

La figure 6 montre, sous la forme d'un diagramme, un procédé 200 selon l'invention pour optimiser la conception d'une centrale photovoltaïque 100.

Sur la figure 6, la référence 220 est utilisée pour se référer à des moyens de calcul, tel qu'un ordinateur, adaptés pour héberger un modèle mathématique de la centrale photovoltaïque 100. Ce modèle mathématique peut avoir la forme d'une application ou d'un autre type de logiciel adapté.

Ledit modèle mathématique de la centrale photovoltaïque 100, comprend notamment les dimensions des unités de production d'électricité, les positions desdites unités de production d'électricité, les distances mutuelles entre lesdites unités de production d'électricité, et l'orientation spécifique pour chacune desdites unités de production d'électricité. De plus, le modèle mathématique peut comprendre des paramètres définissant la zone de l'implantation de la centrale photovoltaïque 100, telles que la latitude, la longitude, l'altitude, l'orientation, et la rugosité du terrain.

Les moyens de calcul 220 sont pourvus d'une entrée 201, adaptée pour fournir des données représentant un vent entrant 15 en direction de la centrale photovoltaïque 100, avec une force du vent déterminée et une direction du vent déterminée. Ces données indiquent la vitesse et la direction du vent entrant 15.

Les moyens de calcul 220 utilisent le modèle mathématique de la centrale photovoltaïque 100 et les données représentant un vent entrant 15 en direction de la centrale photovoltaïque 100 pour identifier un sous-ensemble 3 du premier groupe 1 d'unités de production d'électricité, ledit sous-ensemble 3 comprenant une pluralité d'unités de production d'électricité positionnées sur le pourtour de la centrale photovoltaïque 100. De façon alternative, le sous-ensemble 3 peut être sélectionné par un utilisateur ou peut-être obtenu, par exemple, manuellement par itération.

En utilisant le modèle mathématique de la centrale photovoltaïque 100, les données représentant un vent entrant 15 en direction de la centrale photovoltaïque 100, et l'orientation des unités de production d'électricité dudit sous-ensemble 3, les moyens de calculs 200 permettent, pour une orientation déterminée des unités de production de l'électricité, d'estimer les forces créées par le vent sur lesdites unités de production d'électricité du premier 1 et deuxième groupe 2 d'unités de production d'électricité.

Sur la figure 6, les résultats de cette estimation sont, de façon schématique, indiqués avec la référence 202.

Les résultats 202 sont utilisés dans une étape suivante d'optimisation 203 pour optimiser l'orientation des unités de production d'électricité dudit sous-ensemble 3. De plus, l'orientation des autres unités de production d'électricité de la centrale photovoltaïque pourrait être optimisée.

Cette optimisation est, dans un premier temps, liée au fait que l'orientation des unités de production d'électricité dudit sous-ensemble 3 exerce une influence sur la façon dont le vent entrant 15 se déplace à travers la centrale photovoltaïque 100.

Pour trouver une position optimale pour l'orientation des unités de production d'électricité dudit sous-ensemble 3, l'orientation des unités de production d'électricité dudit sous-ensemble 3 est modifiée. Cette étape est indiquée avec la référence 204. De plus, l'orientation des unités de production d'électricité du deuxième groupe 2 peut être modifiée.

Après la modification de l'orientation de la pluralité d'unités de production d'électricité du sous-ensemble 3 du premier groupe 1 et optionnellement la modification de l'orientation des unités de production d'électricité du deuxième groupe 2, la force instantanée modifiée créée par le vent sur les unités de production d'électricité du premier 1 et du deuxième groupe 2 est estimée de nouveau.

Ce processus de modification de l'orientation de la pluralité d'unités de production d'électricité du sous-ensemble 3 du premier groupe 1, suivi par l'estimation de la force maximale modifiée qui est créée par le vent entrant 15 sur les unités de production d'électricité du premier 1 et du deuxième groupe 2, est répété plusieurs fois.

Le processus est répété jusqu'à la détermination d'une orientation de sécurité pour chacune des unités de production d'électricité du sous-ensemble 3 du premier groupe 1 et les unités de production d'électricité du deuxième groupe 2. Cette orientation de sécurité correspond à un ensemble de positions optimales pour minimiser les forces créées par le vent entrant 15. La réalisation de cette minimisation basée sur une position optimale concernant l'orientation de chaque unité de production d'électricité du sous-ensemble 3 et, optionnellement, du sous-ensemble 2, est schématiquement indiquée dans la figure 6 avec la référence 206.

Ensuite, les positions optimales pour l'orientation de chaque unité de production d'électricité du sous-ensemble 3, telles que représentées avec la référence 206, sont utilisées en combinaison avec les données géométriques représentées avec la référence 205, à l'aide d'un modèle mathématique représenté avec la référence 207. Ceci, afin d'obtenir des résultats qui correspondent à une estimation de l'ensemble des données représentatives pour les forces exercées sur la centrale photovoltaïque 100, tel que représenté avec la référence 208.

Les résultats 208 sont ensuite utilisés pour calculer les dimensions optimisées des différents éléments de la centrale photovoltaïque 100. Cette étape de calcul est représentée avec la référence 209.

Le résultat final est une centrale photovoltaïque 100avec une position de sécurité c'est-à-dire avec un dimensionnement optimal de sa structure, tel que représenté avec la référence 210.

Il est prévisible que les résultats du procédé 200, selon la figure 6, suggèrent de renforcer la structure des unités de production d'électricité du premier groupe 1 et d'utiliser une structure plus légère pour les unités de production d'électricité du deuxième groupe 2.

Ainsi, une structure optimisée et individualisée peut être proposée pour chaque unité de production d'électricité de la centrale photovoltaïque 100.

Le résultat du processus selon la figure 6 est qu'un utilisateur peut optimiser la conception d'une centrale photovoltaïque 100 et obtenir une structure moins onéreuse et plus adaptée aux forces exercées sur la structure de la centrale photovoltaïque 100 par un vent entrant.

Il est noté que selon l'invention, l'orientation optimale des unités de production d'électricité de la centrale photovoltaïque du sous-ensemble 3, à laquelle il est fait référence ci-dessus, est basée sur l'estimation de l'ensemble des forces exercées sur la centrale photovoltaïque 100 et concerne une position de sécurité pour la centrale photovoltaïque 100.

Pour la centrale photovoltaïque 100, un seuil est déterminé pour la vitesse du vent entrant, ledit seuil étant acceptable pour utiliser la centrale photovoltaïque 100 en toute sécurité dans toutes les positions d'exploitation. La hauteur de ce seuil dépend, notamment, du type de centrale photovoltaïque concernée, de l'endroit où se trouve la centrale et de son exposition minimale au vent.

Pour des centrales photovoltaïques en France, selon l'art antérieur, un des seuils connus est de 60 km/h pour, par exemple, des centrales photovoltaïques comprenant des trackers. Au-dessous de ce seuil, il est considéré que la centrale peut opérer en toute sécurité ; au-dessus de ce seuil, il est considéré que la centrale doit être positionnée dans une position de sécurité. Il est clair que dans des endroits spécifiques et pour des types de centrale photovoltaïque spécifiques d'autres seuils peuvent être définis.

Les résultats des estimations résultants du procédé 200 peuvent être utilisés pour utiliser une centrale photovoltaïque 100 en toute sécurité et protégeant mieux une centrale photovoltaïque 100 contre les forces exercées par un vent entrant 15.

Pour profiter d'une telle gestion améliorée, une centrale photovoltaïque 100 pour la production d'électricité comprend une pluralité d'unités de production d'électricité, avec un premier groupe 1 d'unités de production d'électricité positionnées sur le pourtour de la centrale photovoltaïque 100, et un deuxième groupe 2 d'unités de production d'électricité positionnées dans une zone moins exposée au vent de la centrale photovoltaïque 100, dans laquelle au moins les unités de production d'électricité du premier groupe 1 sont chacune conçues pour modifier leur orientation par rapport au support pour ainsi optimiser leur orientation vers le soleil, les unités de production d'électricité du premier groupe 1 étant connectées à des moyens de commande pour contrôler ladite orientation. Optionnellement, les unités de production d'électricité du deuxième groupe 2 sont chacune conçues pour modifier leur orientation par rapport au support pour ainsi optimiser leur orientation vers le soleil, les unités de production d'électricité du deuxième groupe 1 sont, selon cette option, connectées à des moyens de commande pour contrôler ladite orientation.

La centrale photovoltaïque 100 comprend aussi des moyens pour déterminer la vitesse et la direction du vent entrant. Un tel moyen pourrait comprendre un capteur du vent ou en ensemble de capteurs qui coopèrent pour déterminer correctement lesdites vitesse et direction du vent.

Dans ladite centrale photovoltaïque 100, les moyens pour déterminer la vitesse et la direction du vent entrant 15 sont connectés auxdits moyens de commande afin de contrôler l'orientation des unités de production d'électricité.

Pendant leur utilisation, les moyens pour déterminer la vitesse et la direction du vent entrant 15 peuvent identifier les unités de production d'électricité de la centrale photovoltaïque 100 du sous-ensemble 3, tel que défini ci-dessus.

Dès que les moyens pour déterminer la vitesse et la direction du vent entrant 15 détectent un vent entrant au-dessus du seuil de sécurité déterminé, les moyens de commande pour contrôler l'orientation des unités de production d'électricité sont utilisés afin de mettre lesdites unités de production d'électricité dans leur position de sécurité.

Dans ladite position de sécurité, les unités de production d'électricité de la centrale photovoltaïque 100 du sous-ensemble 3, sont directement exposées au vent entrant et subissent des efforts générés par ledit vent entrant 15. Les autres unités de production d'électricité de la centrale photovoltaïque 100 sont protégées par lesdites unités de production d'électricité du sous-ensemble 3 et sont, pour cette raison, moins sollicitées et subissent des efforts moins importants.

Grace au procédé selon l'invention, seules les unités les plus exposées sont dimensionnées pour résister aux efforts les plus importants, tandis que les unités de production d'électricité de la centrale photovoltaïque 100, qui sont moins exposées, sont dimensionnées pour pouvoir résister aux efforts moins importants.

Cela signifie que ces unités de production d'électricité de la centrale photovoltaïque 100, moins exposées, peuvent être conçues à moindre coût.

Grâce au procédé selon l'invention, les efforts subis par les différentes unités de production d'électricité de la centrale photovoltaïque 100 sont mieux estimés pendant la phase de conception de la centrale photovoltaïque 100.

Pour cette raison, toutes les unités de production d'électricité de la centrale photovoltaïque 100 sont adaptées pour résister aux efforts produits par le vent entrant, bien que le dimensionnement des unités de production d'électricité de la centrale photovoltaïque 100 ne soit pas uniforme dans l'ensemble de la centrale photovoltaïque 100.

## Revendications

1. Procédé (200) mis en œuvre par ordinateur pour optimiser la conception d'une centrale photovoltaïque (100) à construire, la centrale photovoltaïque (100) comprenant une structure pourvue d'une pluralité d'unités de production d'électricité, les unités de production d'électricité ayant chacune une orientation spécifique par rapport à leur support afin d'optimiser leur production d'électricité, le procédé comprenant les étapes suivantes :
- obtenir dans un ordinateur un modèle mathématique de la centrale photovoltaïque (100) comprenant les dimensions desdites unités de production d'électricité, les positions desdites unités de production d'électricité, les distances mutuelles entre lesdites unités de production d'électricité, et l'orientation spécifique pour chacune desdites unités de production d'électricité,
- identifier un premier groupe (1) d'unités de production d'électricité, comprenant des unités de production d'électricité positionnées sur le pourtour de la centrale photovoltaïque (100),
- identifier un deuxième groupe (2) d'unités de production d'électricité, comprenant des unités de production d'électricité positionnées dans une zone centrale de la centrale photovoltaïque (100),
- déterminer des données représentant un vent entrant (15) en direction de la centrale photovoltaïque (100) avec une vitesse du vent déterminée et une direction du vent déterminée,
- utiliser ladite direction du vent (15) déterminée pour identifier un sous-ensemble (3) dudit premier groupe (1), comprenant une pluralité des unités de production d'électricité positionnées sur le pourtour de la centrale photovoltaïque (100) et directement exposées audit vent entrant (15),
- estimer au moyen du modèle mathématique et des données représentant le vent entrant (15) sur une durée déterminée, les forces créées par le vent entrant (15) sur les unités de production d'électricité du premier (1) et du deuxième (2) groupe, pour une pluralité d'orientations pour chacune de ladite pluralité d'unités de production d'électricité dudit sous-ensemble (3) du premier groupe (1),
- sélectionner, parmi cette pluralité d'orientations pour ladite pluralité d'unités de production d'électricité dudit sous-ensemble (3) du premier groupe (1), une orientation de sécurité pour au moins une partie des unités de production d'électricité du premier (1) et du deuxième (2) groupe qui correspond à un ensemble d'orientations optimales pour résister aux forces créées par le vent entrant (15) sur les unités de production d'électricité,
- utiliser les forces créées par le vent sur les unités de production d'électricité du premier (1) et du deuxième (2) groupe dans ladite orientation de sécurité pour calculer un dimensionnement pour la structure desdites unités de production d'électricité du premier (1) et du deuxième (2) groupe adaptée pour résister audites forces créées par le vent (15).

2. Procédé (200) selon la revendication 1, dans lequel le modèle mathématique comprend des paramètres définissant la zone de l'implantation de la centrale photovoltaïque (100), telles que la latitude, la longitude, l'altitude, l'orientation, et la rugosité du terrain.

3. Procédé (200) selon la revendication 1 ou 2, dans lequel l'étape d'estimer les forces créées par le vent entrant (15) sur les unités de production d'électricité au moyen du modèle mathématique et des données représentant un vent entrant (15) en direction de la centrale photovoltaïque (100) avec une force du vent déterminée et une direction du vent déterminée comprend :
a) estimer, pour une première orientation de la pluralité d'unités de production d'électricité dudit sous-ensemble (3) du premier groupe (1) une force créée par le vent sur les unités de production d'électricité du premier (1) et du deuxième groupe (2),
b) modifier l'orientation d'au moins une première unité de production d'électricité de ladite pluralité d'unités de production d'électricité dudit sous-ensemble (3) du premier groupe (1) pour obtenir une orientation modifiée de la pluralité d'unités de production d'électricité dudit sous-ensemble du premier groupe (1),
c) estimer pour l'orientation modifiée de la pluralité d'unités de production d'électricité dudit sous-ensemble (3) du premier groupe (1) une force maximale modifiée créée par le vent sur les unités de production d'électricité du premier (1) et du deuxième (2) groupe, et
d) répéter les étapes b) et c) pour ainsi obtenir des données concernant la force créée par le vent sur les unités de production d'électricité du premier (1) et du deuxième (2) groupe pour une pluralité d'orientations pour chacune de ladite pluralité d'unités de production d'électricité dudit sous-ensemble (3) du premier groupe (1).

4. Procédé (200) selon de l'une des revendications précédentes, dans lequel le premier groupe (1) des unités de production d'électricité, comprend au moins une rangée des unités de production d'électricité positionnées sur le pourtour de la centrale photovoltaïque (100).

5. Produit programme d'ordinateur comprenant des instructions qui, lorsque le programme est exécuté par un ordinateur, conduisent celui-ci à mettre en œuvre le procédé (200) selon l'une des revendications 1 à 4.

6. Support d'enregistrement lisible par ordinateur comprenant des instructions qui, lorsqu'elles sont exécutées par un ordinateur, conduisent celui-ci à mettre en œuvre le procédé (200) selon l'une des revendications 1 à 4.
